# EUROPÄISCHE PATENTSCHRIFT

(11) **EP 2 547 612 B1**
(45) Veröffentlichungstag und Bekanntmachung des Hinweises auf die Patenterteilung: **26.03.2014**
(21) Anmeldenummer: 10795220.2
(22) Anmeldetag: 08.12.2010
(51) Int. Cl.: B65G 57/06, B65G 57/10, B65G 57/24

(54) **VORRICHTUNG ZUM BELADEN VON PALETTEN MIT STÜCKGUT**
DEVICE FOR LOADING PALLETS WITH PARCELS
APPAREIL POUR CHARGER DES PALETTES AVEC DES COLIS

(30) Priorität: 15.03.2010 DE 102010011534
(43) Veröffentlichungstag der Anmeldung: 23.01.2013
(73) Patentinhaber: KHS GmbH, 44143 Dortmund (DE)
(72) Erfinder: HOLZER, Hans-Werner, 67596 Dittelsheim-Heßloch (DE)
(86) Internationale Anmeldenummer: PCT/EP2010/007446
(87) Internationale Veröffentlichungsnummer: WO 2011/113459

(56) Entgegenhaltungen:
- EP-A1- 0 146 643
- WO-A1-2008/154903
- DE-A1-102008 015 278

## Beschreibung

Die Erfindung bezieht sich auf eine Vorrichtung gemäß Oberbegriff Patentanspruch 1.

Eine Vorrichtung dieser ist bekannt (DE 10 2008 015 278 A1) und dient zum Beladen von Paletten (Transport- und/oder Lagerpaletten) mit Stückgut in der Weise, dass das Stückgut auf der jeweiligen Palette einen mehrlagigen Stückgutstapel bildet. Hierfür umfasst die Vorrichtung im Wesentlichen eine Bereitstellungsposition mit einem Bereitstellungs- oder Zuteiltisch, auf dessen horizontaler oder im Wesentlichen horizontaler Tischebene Stückgutlagen vorbereitet werden. Weiterhin umfasst die Vorrichtung eine Stapelposition, an der die jeweilige Stückgutlage auf eine Ablageebene abgesetzt wird, die von der Oberseite einer Palette oder von der Oberseite einer bereits zuvor übertragenen Stückgutlage gebildet ist, so dass sukzessiv bzw. in mehreren Arbeitszyklen der aus mehreren Stückgutlagen bestehende Stückgutstapel auf der Palette gebildet wird.

Für die Übertragung der Stückgutlagen von der Bereitstellungsposition an die Stapelposition besitzt die Vorrichtung auch eine Übertragungseinrichtung, deren wesentlicher Bestandteil zwei Aufnahmeelemente oder Lade- oder Schiebebleche sind. Diese sind durch einen Hubantrieb in vertikalen und horizontalen Hüben gesteuert derart bewegbar, dass am Beginn jedes Arbeitszyklus sich ein erstes Aufnahmeelement an der Bereitstellungsposition befindet, und zwar auf einem ersten Höhenniveau bzw. auf dem Höhenniveau des dortigen Zuteiltisches, sodass die auf dem Zuteiltisch gebildete Stückgutlage auf das erste Aufnahmeelement vollständig aufgeschoben werden kann.

Die beiden Aufnahmeelemente werden dann in einem Vertikalhub auf ein zweites Höhenniveau bewegt, welches sich oberhalb des Niveaus der Ablageebene befindet, wobei der Abstand dieses Höhenniveaus von der Ablageebene kleiner ist als die Höhe einer Stückgutlage. Beide Aufnahmeelemente werden auf dem zweiten Höhenniveau in einem Horizontalhub zusammengefahren, sodass die Aufnahmeelemente dann auf dem zweiten Höhenniveau in einer Zwischenposition aneinander anschließen und eine durchgehende Aufnahmeebene oder -fläche für die vom Zuteiltisch aufgenommene und zu übertragende Stückgutlage bilden. Diese wird dann von dem ersten Aufnahmeelement teilweise auf das zweite Aufnahmeelement übergeschoben, sodass die zu übertragende Stückgutlage beispielsweise je zur Hälfte auf jedem Aufnahmeelement aufliegt. Aus der Zwischenposition werden die Aufnahmeelemente in einem weiteren Horizontalhub synchron und richtungsgleich sowie mit derselben Geschwindigkeit in eine Übergabeposition bewegt, in der sich die Aufnahmeelemente und deren Übergangs- oder Anschlussbereich auf dem zweiten Höhenniveau oberhalb der Ablageebene befinden und die vertikale Projektion der zu übertragenden Stückgutlage deckungsgleich mit der Palette oder der die Ablageebene bildenden bereits früher übertragenen Stückgutlage ist. Zum endgültigen Ablegen oder Absetzen der zu übertragenden Stückgutlage auf die Ablageebene werden die beiden Aufnahmeelemente in jeweils einem weitern Horizontalhub soweit auseinander gefahren, dass die zu übertragene Stückgutlage schließlich vollständig auf der Ablageebene aufliegt. Im Anschluss daran werden beide Aufnahmeelemente auf das erste Höhenniveau zurückbewegt, sodass das erste Aufnahmeelement wieder niveaugleich oder etwa niveaugleich mit dem Zuteiltisch angeordnet ist und damit am Beginn eines weiteren Arbeitszyklus die weitere zu übertragende Stückgutlage vom Zuteiltisch auf das erste Aufnahmeelement aufgeschoben werden kann.

Nachteilig ist bei der bekannten Vorrichtung, dass für beide Aufnahmeelemente ein gemeinsamer Hubantrieb vorgesehen ist, der insbesondere auch einen gemeinsamen Vertikalhub für die Aufnahmeelemente bewirkt, wodurch sich u.a. längere Zykluszeiten für die Arbeitszyklen und damit eine reduzierte Leistung (Anzahl der beladenen Paletten je Zeiteinheit) für die Vorrichtung ergeben.

Aufgabe der Erfindung ist es, eine Vorrichtung zum Beladen von Paletten aufzuzeigen, die bei hoher Betriebssicherheit eine höhere Leistung aufweist. Zur Lösung dieser Aufgabe ist eine Vorrichtung entsprechend dem Patentanspruch 1 ausgebildet.

Die Besonderheit der erfindungsgemäßen Vorrichtung besteht darin, dass das wenigstens eine erste und das wenigstens eine zweite Aufnahmeelement insbesondere auch in Bezug auf den Vertikalhub unabhängig voneinander steuerbar sind bzw. für das wenigstens eine erste und das wenigstens eine zweite Aufnahmeelement jeweils ein eigenständiger Hubantrieb vorgesehen ist. Hierdurch ist es u.a. möglich, dass sich das wenigstens eine zweite Aufnahmeelement am Beginn jedes Arbeitszyklus bereits in der Zwischenposition oder aber in der Übergabeposition befindet, sodass die Bewegungshübe für das wenigstens eine zweite Aufnahmeelement und die hierfür benötigten Zeiten bei der Übertragung und beim Absetzen der jeweiligen Stückgutlage auf die Ablageebene und damit auch die Zykluszeit des jeweiligen Arbeitszyklus insgesamt wesentlich reduziert werden.

Packmittel im Sinne der Erfindung sind grundsätzlich alle zum Verpacken von Produkten üblicherweise verwendet und zur Bildung der Stückgutlagen 3 oder Stückgutteillagen geeignete Verpackungen, insbesondere auch zu Gebinden zusammengefasste und/oder in Transportkästen oder auf Trays angeordnete Flaschen, Dosen und dergleichen Behälter.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

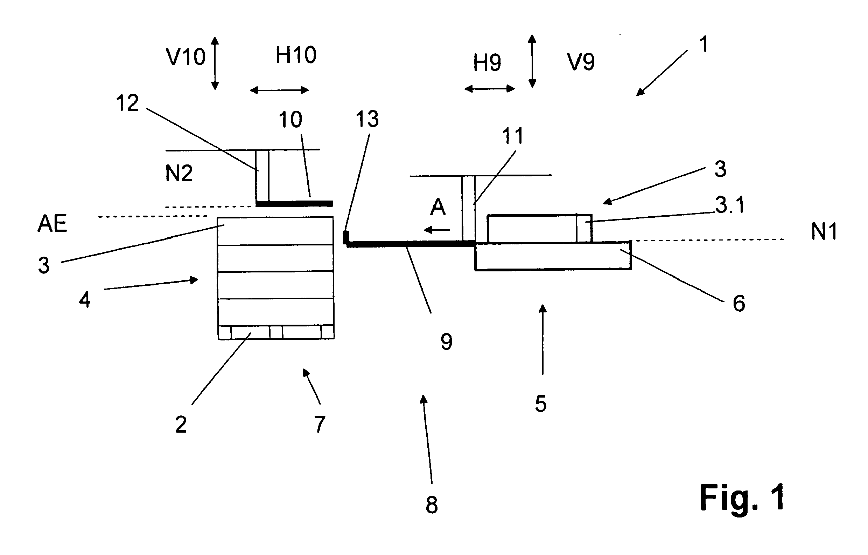

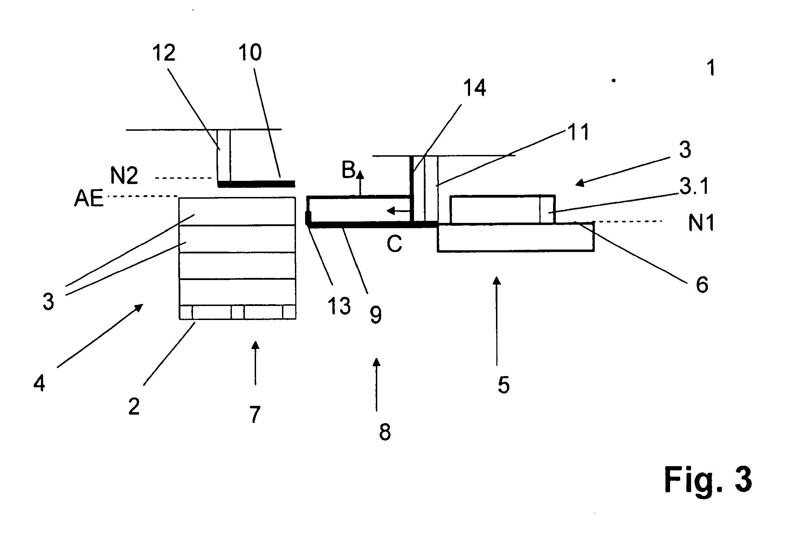

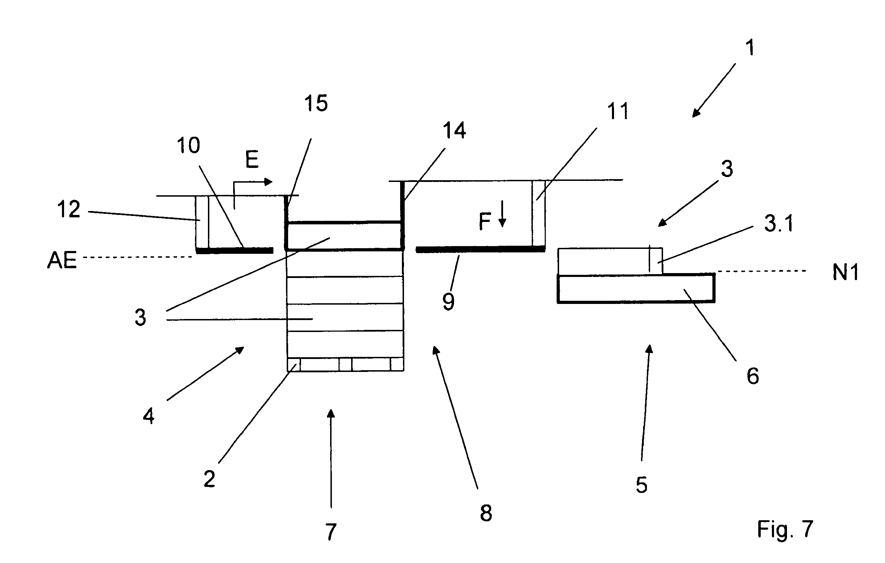

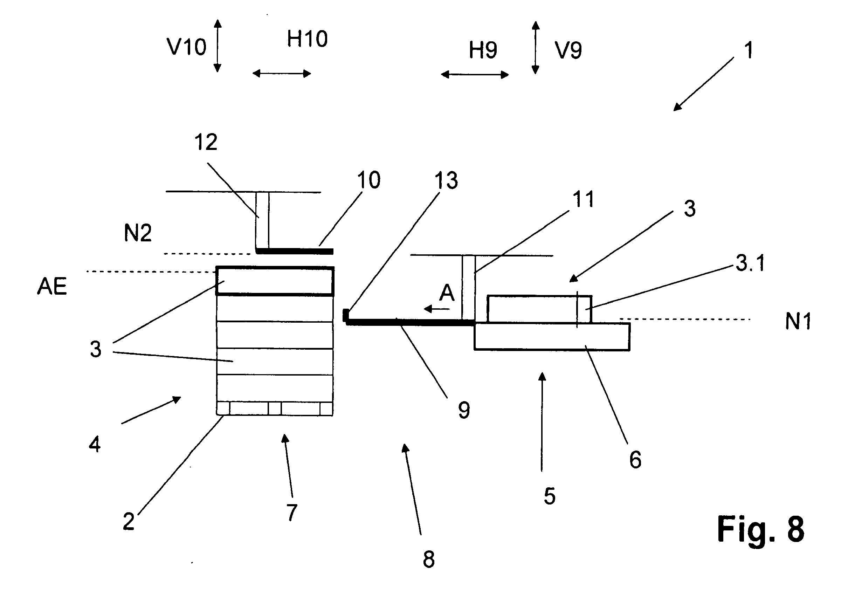

Die Erfindung wird im Folgenden anhand der Figuren 1 - 8, die jeweils in einer schematischen Funktionsdarstellung eine Vorrichtung gemäß der Erfindung in verschiedenen Arbeitspositionen eines Arbeitszyklus wiedergeben, näher erläutert.

Die in den Figuren allgemein mit 1 bezeichnete Vorrichtung dient zum Beladen von Paletten 2 mit Stückgutlagen 3, die übereinander gestapelt auf der Palette 2 einen Stückgutstapel bilden und jeweils aus einer Vielzahl von Stückgütern 3.1 bestehen. Letztere sind beispielsweise mit einem Produkt gefüllte Packmittel, z.B. mit Getränken oder anderen Lebensmitteln gefüllte Packmittel oder Gebinde aus mehrere derartige Packmittein, auch in Form von Packmitteln enthaltenden Trays oder Transportkästen usw. Eine Vorrichtung dieser Art wird vielfach auch als "Palettierer" bezeichnet.

Die Vorrichtung 1 umfasst u.a. eine Bereitstellungsposition 5 mit einem Bereitstellungs- oder Zuteiltisch 6, der eine horizontale Transport- oder Tischebene bildet, auf der die Stückgutlagen 3 aus den Stückgütern 3.1 gebildet werden, die der Bereitstellungsposition 5 über ein nicht dargestelltes Transportsystem zugeführt werden.

Die Vorrichtung 1 umfasst weiterhin eine gegenüber der Bereitstellungsposition 5 räumlich versetzte Stapelposition 7, der die jeweilige Palette 2 zum Palettieren bzw. zum Aufbringen der Stückgutlagen 3 über ein nicht dargestelltes Palettentransportsystem zugeführt wird und aus der die Palette 2, die während des Palettierens ortsfest an der Stapelposition 7 angeordnet ist, nach dem Beladen mit dem Stückgutlagen 3 bzw. nach Fertigstellung des Stückgutstapels 4 einer weiteren Verwendung und/oder Behandlung zugeleitet wird.

Die Vorrichtung 1 besitzt weiterhin eine in den Figuren allgemein mit 8 bezeichnete Umsetzeinrichtung, mit der die jeweils auf dem Zuteiltisch 6 gebildete Stückgutlage 3 an die Stapelposition 7 übertragen und dort auf die Ablageebene abgesetzt wird, die von der Oberseite der bereitstehende Palette 2 oder von der Oberseite einer bereits zuvor, d.h. in einem vorausgehenden Arbeitszyklus an die Stapelposition 7 übertragenen Stückgutlage 3 gebildet ist.

Die Übersetzvorrichtung 8 besteht im Wesentlichen aus zwei Aufnahmeelementen 9 und 10, die an ihrer Oberseite jeweils eine horizontale Aufnahmefläche oder Stückgutauflage bilden und auch als Schiebe- oder Lageblech bezeichnet werden. Die Oberseite oder Aufnahmefläche der Aufnahmeelemente 9 und 10 ist beispielsweise jeweils von der glatten Oberseite eines Metall- oder Stahlbleches gebildet oder aber von einem Rollengang mit einer Vielzahl von frei drehbaren Rollen. Dem in den Figuren jeweils rechten Aufnahmeelement 9 ist ein Hubantrieb 11 zugeordnet, mit dem das Aufnahmeelement 9 in der nachstehend noch näher beschriebenen Weise für Vertikalhübe V9 und Horizontalhübe H9 gesteuert bewegbar ist. Dem Aufnahmegerät 10 ist ein eigenständiger Hubantrieb 12 zugeordnet, mit dem das Aufnahmeelement 10 in der nachstehend noch näher beschriebenen Weise für Vertikalhübe V10 und Horizontalhübe H10 gesteuert bewegbar ist, wobei die Achsen der Vertikalhübe V9 und V10 sowie der Horizontalhübe H9 und H10 in einer gemeinsamen vertikalen Ebene liegen.

An seiner der Stapelposition 7 zugewandten Seite ist das Aufnahmeelement 9 mit einem Anschlag 13 versehen, der zwischen einem wirksamen und einem nicht wirksamen Zustand steuerbar ist. Weiterhin sind den Aufnahmeelementen 9 und 10 Anschläge zugeordnet, und zwar dem Aufnahmeelement 9 der Anschlag 14 und dem Aufnahmeelement 10 der Anschlag 15. Von diesen Anschlägen hat zumindest der Anschlag 14 zugleich auch Schieberfunktion und ist hierfür in horizontaler Richtung und in Richtung des Horizontalhubes H9 bewegbar.

Die Größe des Aufnahmeelementes 9 ist so gewählt, dass auf diesem Aufnahmeelement zumindest eine komplette Stückgutlage 3 Platz findet. Die Größe des Aufnahmeelementes 10 ist so gewählt, dass die Breite, die das Aufnahmeelement 10 bzw. dessen Aufnahmefläche in einer horizontalen Achsrichtung senkrecht zum Horizontalhub H10 aufweist, wenigstens gleich der entsprechenden Breite der Stückgutlagen 3 in dieser Achsrichtung ist, während die Breite, die das Aufnahmeelement 10 bzw. dessen Aufnahmefläche in der horizontalen Achsrichtung des Horizontalhubes H10 aufweist, kürzer ist als die entsprechende Breite einer Stückgutlage 3 in dieser Achsrichtung, beispielsweise etwa der halben Breite der Stückgutlage entspricht.

Durch die getrennten und individuell ansteuerbaren Hubantriebe 11 und 12 ist mit der Vorrichtung 1 u.a. eine Verfahrensweise möglich, die ein Beladen der Paletten 2 mit wesentlich verbesserter Leistung (Anzahl der beladenen Paletten 2 je Zeiteinheit) ermöglicht.

Einzelne Verfahrensschritte eines Arbeitszyklus zum Umsetzen einer jeden Stückgutlage 3 von der Bereitstellungsposition 5 an die Stapelposition 7 sind in den Figuren 1 - 8 dargestellt.

Die Figur 1 zeigt die Vorrichtung 1 in einer Ausgangsposition am Beginn des jeweiligen Arbeitszyklus. Das Aufnahmeelement 9 befindet zwischen der Bereitstellungsposition 5 und der Beladeposition 7, und zwar mit seiner Aufnahmefläche auf dem Höhenniveau N1 und dabei niveaugleich mit der horizontalen Transport- oder Tischfläche des Zuteiltisches 6 und an diese Tischfläche unmittelbar anschließend. Das Aufnahmeelement 10 befindet sich in einer Zwischenposition auf dem Höhenniveau N2 über der Stapelposition 7 und oberhalb der Ablageebene AE.

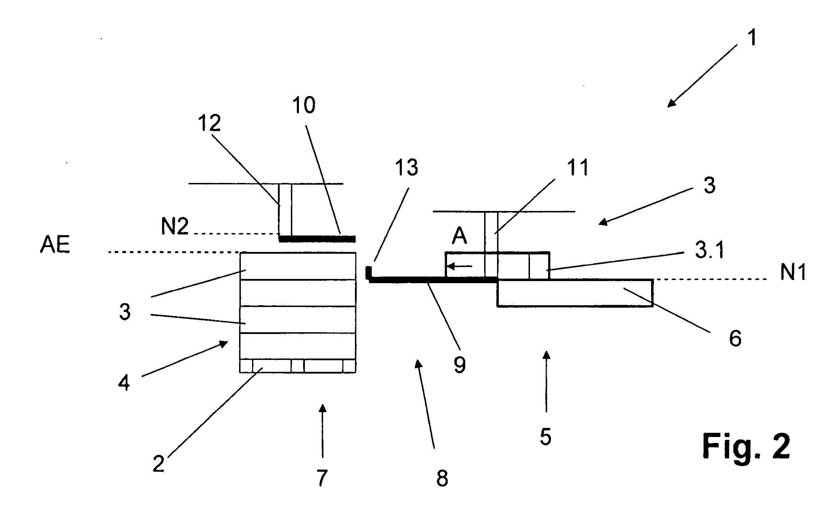

Entsprechend Figur 2 wird in einem ersten Schritt des Arbeitszyklus mit Hilfe eines Schiebers die auf dem Zuteiltisch 6 gebildete Stückgutlage 3 auf das Aufnahmeelement 9 geschoben (Pfeil A). Sobald sich die gesamte Stückgutlage 3 auf dem Aufnahmeelement 9 befindet, erfolgt in einem zweiten Schritt des Arbeitszyklus mit dem Hubantrieb 11 eine gesteuerte vertikale Hubbewegung des Aufnahmeelementes 9, d.h. bei der gewählten Darstellung entsprechend dem Pfeil B ein gesteuertes Anheben des Aufnahmeelementes 9 derart, dass die Aufnahmefläche des Aufnahmeelementes 9 schließlich in einer gemeinsamen Ebene mit der Aufnahmefläche des in der Zwischenposition befindlichen Aufnahmeelementes 10 liegt, d.h. ebenfalls auf dem Höhenniveau N2. Während dieser Hubbewegung (Pfeil B) wird mittels des als Schieber 14 ausgebildeten Anschlags die Stückgutlage 3 soweit vorgeschoben, dass sie gegen den Anschlag 13 zur Anlage kommt (Pfeil C), wobei die Stückgüter aber nicht anliegen müssen.

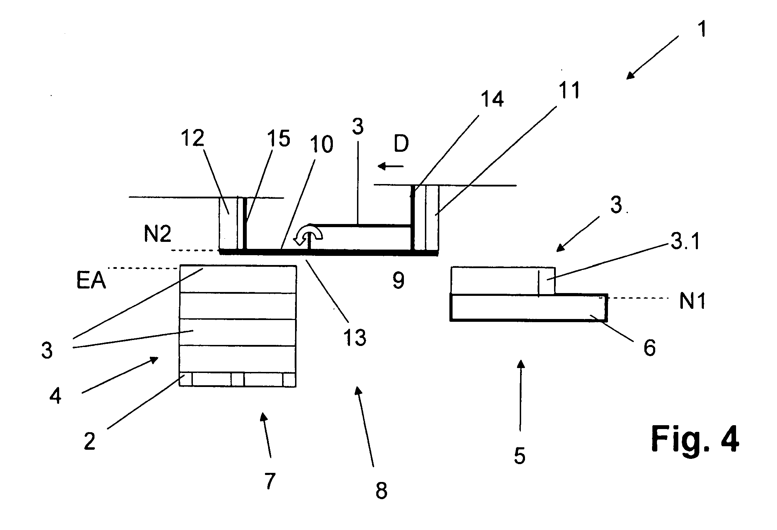

Sobald die Aufnahmefläche des Aufnahmeelementes 9 das Höhenniveau N2 erreicht hat, werden die beiden Aufnahmeelemente 9 und 10 in einem dritten Schritt des Arbeitszyklus durch gesteuerten Horizontalhub so zusammenbewegt oder zusammengefahren, dass sie eine gemeinsame horizontale Aufnahmefläche für die Stückgutlage 3 bilden. Der Anschlag 13 wird hierbei in den nicht wirksamen Zustand bewegt. Ist der Anschlag 13 beispielsweise als Wandabschnitt ausgebildet, so kann dies durch Schwenken des Anschlages in der Form erfolgen, dass er dann den Übergang zwischen den horizontalen Aufnahmeflächen der Aufnahmeelemente 9 und 10 bildet. Für das Zusammenführen der Aufnahmeelemente 9 und 10 wird bevorzugt das Aufnahmeelement 9 auf das Aufnahmeelement 10 zu bewegt, wie dies in der Figur 4 mit dem Pfeil D angedeutet ist.

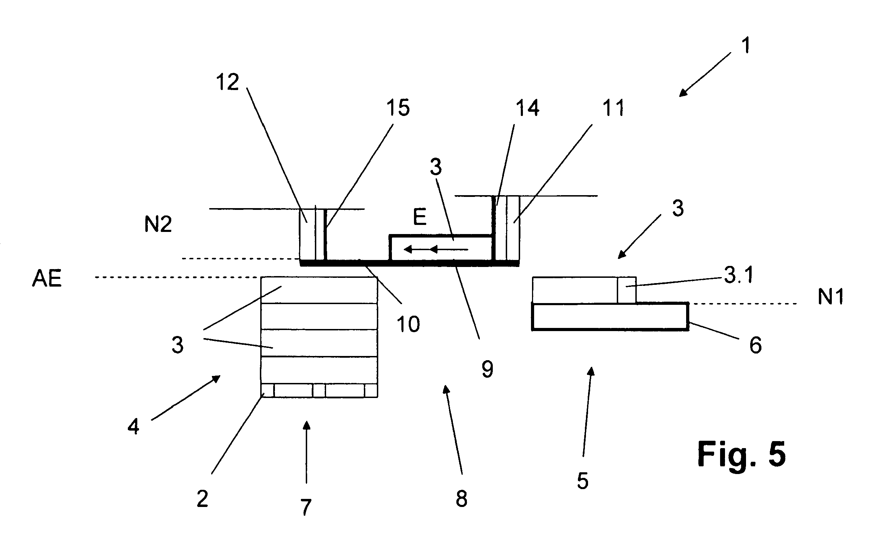

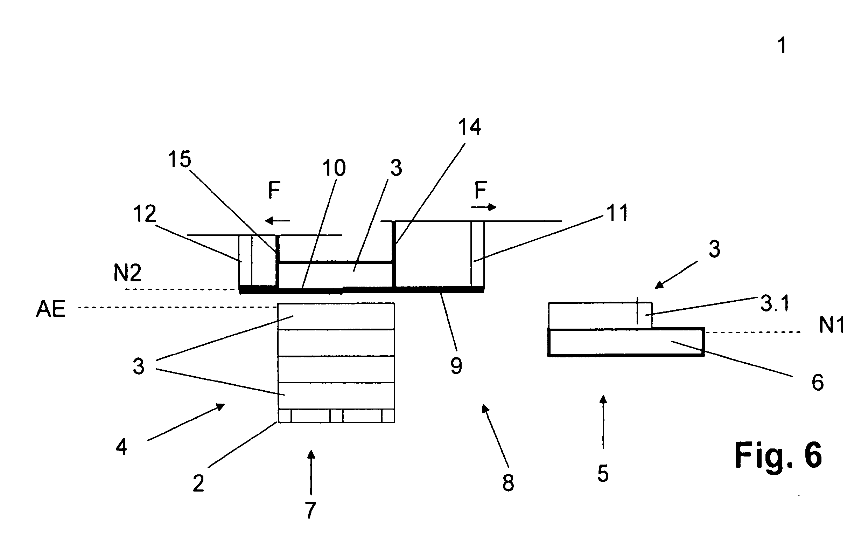

Unmittelbar nach dem Zusammenführen der beiden Aufnahmeelemente 9 und 10 wird in einem vierten Schritt des Arbeitszyklus die bis dahin ausschließlich auf dem Aufnahmeelement 9 angeordnete Stückgutlage 3 mit dem als Schieber ausgebildeten Anschlag 14 entsprechend den Pfeilen E der Figur 5 in horizontaler Richtung so verschoben, dass die Stückgutlage 3 gegen den Anschlag 15 des Aufnahmeelementes 10 zur Anlage kommt und die Stückgutlage 3 dadurch teilweise auf dem Aufnahmeelement 9 und teilweise auf dem Aufnahmeelement 10 aufliegt (Figur 6), und zwar bei der dargestellten Ausführungsform mit ihrer halben, sich in Richtung der Horizontalhübe H9 und H10 erstreckenden Breite auf jeweils einer Aufnahme 9 und 10.

In einem fünften Schritt des Arbeitszyklus werden die Aufnahmeelemente 9 und 10 gemeinsam in einem Horizontalhub H9 und H10 in die Übergabeposition bewegt , in der sich der Übergang zwischen den dicht an einander anschließenden Aufnahmeelementen 9 und 10 und auch die auf den Aufnahmeelementen 9 und 10 aufliegende Stückgutlage 3 unmittelbar über dem auf der Palette 2 bereits gebildeten Stückgutstapel 4 befinden.

In einem sechsten Verfahrensschritt des Arbeitszyklus werden die beiden Aufnahmen 9 und 10 durch Horizontalhub H9 bzw. H10 auseinander gefahren oder auseinander bewegt, und zwar vorzugsweise synchron mit gleicher Geschwindigkeit, aber in entgegen gesetzter Richtung (Pfeile F), sodass die Stückgutauflage 3 dann auf der Ablageebene bzw. auf der Oberseite des auf der Palette 2 bereits gebildeten Stückgutstapels 4 abgesetzt wird.

In einem siebten Verfahrensschritt des Arbeitszyklus wird das Aufnahmeelement 9 an die Bereitstellungsposition 5 bzw. in die dortige Aufnahmestellung zurück bewegt. Gleichzeitig wird das Aufnahmeelement 10 mit seinem eigenständigen Hubantrieb 12 in die neue Zwischenposition auf einem neuen Höhenniveau N2 bewegt, welches sich mit Abstand oberhalb der Oberseite der Stückgutlage 3 befindet, die in diesem Arbeitszyklus zuvor an der Stapelposition 7 abgelegt wurde, wobei dieser Abstand bei der dargestellten Ausführungsform kleiner ist als die vertikale Höhe einer Stückgutlage 3.

Die zwischenzeitlich auf dem Zuteiltisch 6 gebildete weitere Stückgutlage 3 kann dann in einem neuen Arbeitszyklus der Vorrichtung 1 in der beschriebenen Weise an die Stapelposition bewegt und dort auf die Palette 2 bzw. auf den auf der Palette 2 bereits gebildeten Stückgutstapel 4 abgesetzt werden. Einige der vorgenannten Schritte des Arbeitszyklus werden bevorzugt zeitgleich oder sich zeitlich überlappend durchgeführt, so insbesondere die dritten bis fünften Schritte des Arbeitszyklus.

Vorstehend wurde die Funktionsweise der Vorrichtung 1 an Hand des Umsetzens einer Stückgutlage 3 vom Zuteiltisch 6 auf die Oberseite eines auf der Palette 2 bereits gebildeten Stückgutstapels 4 beschrieben. In analoger Weise erfolgt auch das Umsetzen der jeweiligen Stückgutlage 3 vom Zuteiltisch 6 auf die Palette 2 oder auf eine dort bereits abgelegte Stückgutlage 3, wobei sich die Zwischenposition und die Übergabeposition bei diesem Arbeitszyklus dann auf dem Höhenniveau N2 mit geringem Abstand oberhalb der Oberseite der Palette 2 oder oberhalb der dort bereits abgelegte Stückgutlage 3 befindet.

Durch die beschriebene Ausbildung der Vorrichtung 1, insbesondere durch die beiden getrennten und individuell ansteuerbaren Hubantriebe 11 und 12 für die Aufnahmeelemente 9 und 10 ergibt sich eine verbesserte bzw. erhöhte Leistung beim Palettieren, und zwar insbesondere dadurch, dass beim Zurückbewegen des Aufnahmeelementes 9 an Bereitstellungsposition 5 das Aufnahmeelement 10 durch seinen eigenen Hubantrieb 12 in die neue Zwischenposition bewegt werden kann. Zum Zusammenführen den beiden Aufnahmeelemente 9 und 10 ist somit lediglich ein relativ kurzer Horizontalhub des Aufnahmeelementes 9 notwendig und zwar in einer horizontalen Achsrichtung, in der dann auch die weitere horizontale Bewegung der Aufnahmeelement 9 und 10 in die Übergabeposition erfolgt.

Es besteht auch die Möglichkeit, dass das Aufnahmeelement 10 am Ende jedes Arbeitszyklus bereits in die neue Übergabeposition bewegt wird, so dass der obige fünften Schritt des Arbeitszyklus entfällt, sich die Aufnahmeelement 9 und 10 nach dem Zusammenführen bereits in der Übergabeposition befinden.

Vorstehend wurde davon ausgegangen, dass in jedem Arbeitszyklus der Vorrichtung 1 eine komplette Stückgutlage 3 von dem dortigen Zuteiltisch 6 abgenommen und auf die Palette 2 bzw. auf die Oberseite einer dort bereits vorhandenen Stückgutlage 3 oder eines dort bereits gebildeten Stückgutstapels 4 abgelegt wird. Obwohl diese Verfahrensweise im Hinblick auf eine möglichst hohe Leistung der Vorrichtung 1 die zweckmäßigste ist, besteht aber grundsätzlich auch die Möglichkeit, dass in jedem Arbeitszyklus jeweils nur eine Stückgutteillage von der Bereitstellungsposition 5 aufgenommen und auf die Palette 2 bzw. auf die Oberseite einer dort bereits vorhandenen Stückgutlage 3 oder eines dort bereits gebildeten Stückgutstapels abgesetzt wird.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugzeichenliste

- 1: Vorrichtung bzw. Palettierer
- 2: Palette
- 3: Stückgutlage
- 3.1: Stückgut
- 4: Stückgutstapel
- 5: Bereitstellungsposition
- 6: Zuteiltisch
- 7: Stapelposition
- 8: Umsetzeinrichtung
- 9, 10: Aufnahmeelement
- 11, 12: Hubantrieb
- 13 - 15: Anschlag

- A - F: Bewegungsrichtung
- N1, N2: Höhenniveau
- AE: Ablageebene

## Patentansprüche

1. Vorrichtung zum Beladen von Paletten (2) mit Stückgut unter Ausbildung eines mehrere Stückgutlagen (3) aufweisenden Stückgutstapels (4), mit einer Bereitstellungsposition (5) zum Bereitstellen jeweils einer Stückgutlage (3) oder einer Stückgutteillage, mit einer Umsetzeinrichtung (8) zum Aufnehmen der Stückgutlage (3) oder der Stückgutteillage an der Bereitstellungsposition (5) und zum Absetzen der aufgenommenen Stückgutlage (3) oder Stückgutteillage auf eine Ablageebene (AE), die von einer Oberseite einer an einer Stapelposition (7) bereitstehenden Palette (2) oder von der Oberseite einer bereits an die Stapelposition (7) übertragenen Stückgutlage (3) gebildet ist, wobei die Umsetzeinrichtung (8) zumindest ein erstes durch einen Hubantrieb zumindest für einen Vertikalhub (V9) und einen Horizontalhub (H9) gesteuert bewegbares Aufnahmeelement (9) sowie wenigstens ein zweites durch einen Hubantrieb zumindest für einen Vertikalhub (V10) und einen Horizontalhub (H10) bewegbares Aufnahmeelement (10) aufweist, wobei das erste Aufnahmeelement (9) zumindest zwischen einer Aufnahmeposition zur Aufnahme der jeweiligen Stückgutlage (3) an der Bereitstellungsposition (5) und einer Übergabeposition bewegbar ist, in der beide Aufnahmeelemente (9, 10) aneinander anschließend in einer gemeinsamen horizontalen Ebene über der Ablageebene (AE) angeordnet sind, und zwar bei teilweise auf dem ersten und teilweise auf dem zweiten Aufnahmeelement (9, 10) aufliegender Stückgutlage (3), und wobei die Aufnahmeelemente (9, 10) zum Ablegen der zu übertragenden Stückgutlage (3) auf die Ablageebene (AE) auseinander bewegbar sind, **dadurch gekennzeichnet, dass** das erste und das zweite Aufnahmeelement (9, 10) bezüglich sämtlicher Bewegungshübe (V9, H9; V10, H10) unabhängig voneinander steuerbar sind und/oder für das erste Aufnahmeelement (9) und das zweite Aufnahmeelement (10) unabhängige und individuell steuerbare Hubantriebe (11, 12) vorgesehen sind.

2. Vorrichtung nach Anspruch 1, **dadurch gekennzeichnet, dass** am Beginn jedes Arbeitszyklus sich das erste Aufnahmeelement (9) an der Bereitstellungsposition (5) befindet, und zwar derart, dass eine Stückgutaufnahmefläche des ersten Aufnahmeelementes auf einem ersten Höhenniveau (N1) niveaugleich oder etwa niveaugleich mit der Bereitstellungsposition (5) oder mit einem dortigen Zuteiltisch (6) angeordnet ist.

3. Vorrichtung nach Anspruch 1 oder 2, **dadurch gekennzeichnet, dass** am Beginn jedes Arbeitszyklus sich das zweite Aufnahmeelement (10) auf einem zweiten Höhenniveau (N2) oberhalb der Ablageebene (AE) für die Ablage der in diesem Arbeitszyklus zu übertragenden Stückgutlage (3) befindet, wobei das zweite Höhenniveau (N2) bevorzugt das Niveau der Übergabeposition ist.

4. Vorrichtung nach Anspruch 2 oder 3, **dadurch gekennzeichnet, dass** das wenigstens eine erste Aufnahmeelement (9) am Ende eines jeden Arbeitszyklus in einem Rückhub aus der Übergabeposition an die Bereitstellungsposition (5) bewegbar ist, und dass zumindest teilweise zeitgleich mit dem Rückhub des ersten Aufnahmeelementes (9) das zweite Aufnahmeelement (10) in eine Zwischenposition oder eine Übergabeposition auf dem zweiten Höhenniveau (N2) oberhalb der Ablageebene (AE) für die nächste an der Stapelposition (7) abzusetzende Stückgutlage (3) oder Stückgutteillage bewegt wird.

5. Vorrichtung nach einem der vorhergehenden Ansprüche, **gekennzeichnet durch** Mittel zum Überführen oder Überschieben der jeweiligen Stückgutlage (3) oder Stückgutteillage von der Bereitstellungsposition (5) oder von dem dortigen Zuteiltisch (6) auf das erste Aufnahmeelement (9) und/oder zum teilweisen Überschieben der zu Stückgutlage (3) oder Stückgutteillage von dem ersten Aufnahmeelement (9) auf das zweite Aufnahmeelement (10) bei zusammengeführten Aufnahmeelementen (9, 10), vorzugsweise auf dem zweiten Höhenniveau (N2).

6. Vorrichtung nach einem der vorhergehenden Ansprüche, **dadurch gekennzeichnet, dass** das erste und das zweite Aufnahmeelement (9, 10) so ausgebildet sind, dass die zu übertragende Stückgutlage (3) oder Stückgutteillage bei in der Übergabeposition befindlichen Aufnahmeelementen (9, 10) jeweils zur Hälfte auf dem ersten und dem zweiten Aufnahmeelement (9, 10) aufliegt.

7. Vorrichtung nach einem der vorhergehenden Ansprüche, **dadurch gekennzeichnet, dass** die Hubantriebe (11, 12) derart ausgebildet und steuerbar sind, dass nach dem Zusammenführen der Aufnahmeelemente (9, 10) beide Aufnahmeelemente (9, 10) synchron und mit gleicher Geschwindigkeit in die Übergabeposition bewegbar sind, in der sich ein Übergang- oder Anschlussbereich zwischen den Aufnahmeelementen (9, 10) über der Ablageebene (AE) befindet.

## Claims

1. Device for loading pallets (2) with piece goods to form a stack (4) of piece goods having a plurality of layers (3) of piece goods comprising a providing position (5) for providing a layer (3) of piece goods or a partial layer of piece goods and comprising a transfer apparatus (8) for receiving the layer (3) of piece goods or the partial layer of piece goods at the providing position (5) and placing the received layer (3) of piece goods or partial layer of piece goods onto a placement plane (AE) which is formed by a top of a pallet (2) available at a stacking position (7) or by the top of a layer (3) of piece goods already transferred to the stacking position (7), wherein the transfer apparatus (8) has at least a first receiving element (9) which can be moved in a controlled manner by a linear actuator at least for a vertical stroke (V9) and a horizontal stroke (H9) and at least a second receiving element (10) which can be moved by a linear actuator at least for a vertical stroke (V10) and a horizontal stroke (H10), wherein the first receiving element (9) can be moved at least between a receiving position for receiving the respective layer (3) of piece goods at the providing position (5) and a transfer position, in which both receiving elements (9, 10) are arranged consecutively in a joint horizontal plane above the placement plane (AE), namely with a layer (3) of piece goods placed partly on the first and partly on the second receiving element (9, 10), and wherein the receiving elements (9, 10) for placing the layer (3) of piece goods, which is to be transferred, onto the placement plane (AE) can be moved apart, **characterised in that** the first and the second receiving element (9, 10) can be controlled independently of each other in respect of all movement strokes (V9, H9; V10, H10) and/or independently and individually controllable linear actuators (11, 12) are provided for the first receiving element (9) and the second receiving element (10).

2. Device according to claim 1, **characterised in that**, at the beginning of each operating cycle, the first receiving element (9) is at the providing position (5) such that a piece goods receiving surface of the first receiving element is arranged at a first height level (N1) equal, or approximately equal, in level with the providing position (5) or with a local distribution table (6).

3. Device according to claim 1 or 2, **characterised in that**, at the beginning of each operating cycle, the second receiving element (10) is at a second height level (N2) above the placement plane (AE) for the placement of the layer (3) of piece goods to be transferred in this operating cycle, wherein the second height level (N2) preferably is the level of the transfer position.

4. Device according to claim 2 or 3, **characterised in that** the at least one first receiving element (9) can be moved at the end of each operating cycle in a return stroke from the transfer position to the providing position (5), and that at least partly simultaneously with the return stroke of the first receiving element (9) the second receiving element (10) is moved to an intermediate position or a transfer position at the second height level (N2) above the placement plane (AE) for the next layer (3) of piece goods or partial layer of piece goods to be placed at the stacking position (7).

5. Device according to any one of the preceding claims, **characterised by** means for transferring or pushing the respective layer (3) of piece goods or partial layer of piece goods from the providing position (5) or from the local distribution table (6) to the first receiving element (9) and/or for partially pushing the layer (3) of piece goods or partial layer of piece goods from the first receiving element (9) to the second receiving element (10) in case of merged receiving elements (9, 10), preferably at the second height level (N2).

6. Device according to any one of the preceding claims, **characterised in that** the first and the second receiving element (9, 10) are designed such that the layer (3) of piece goods or partial layer of piece goods to be transferred, for receiving elements (9, 10) located in the transfer position, is placed, split equally, on the first and the second receiving element (9, 10).

7. Device according to any one of the preceding claims, **characterised in that** the linear actuators (11, 12) are designed and controllable such that, after merging the receiving elements (9, 10), both receiving elements (9, 10) can be moved synchronously and at the same speed to the transfer position in which there is a transitional or connecting area between the receiving elements (9, 10) above the placement plane (AE).

## Revendications

1. Dispositif servant à charger sur des palettes (2) des marchandises de détail en formant un empilement de marchandises de détail (4) présentant plusieurs couches de marchandises de détail (3), comprenant une position de mise à disposition (5) servant à mettre à disposition respectivement une couche de marchandises de détail (3) ou une couche partielle de marchandises de détail, comprenant un système de changement de position (8) servant à recevoir la couche de marchandises de détail (3) ou la couche partielle de marchandises de détail au niveau de la position de mise à disposition (5) et servant à déposer la couche de marchandises de détail (3) reçue ou la couche partielle de marchandises de détail sur un plan de dépôt (AE), qui est formé par un côté supérieur d'une palette (2) disponible dans une position d'empilement (7) ou par le côté supérieur d'une couche de marchandises de détail (3) déjà transférée au niveau de la position d'empilement (7), sachant que le système de changement de position (8) présente au moins un premier élément de réception (9) pouvant être déplacé de manière commandée par un entraînement de levage pour au moins une course verticale (V9) et une course horizontale (H9) ainsi qu'au moins un deuxième élément de réception (10) pouvant être déplacé par un entraînement de levage au moins pour une course verticale (V10) et une course horizontale (H10), sachant que le premier élément de réception (9) peut être déplacé au moins entre une position de réception servant à recevoir la couche de marchandises de détail (3) respective au niveau de la position de mise à disposition (5) et une position de transfert, dans laquelle sont disposés les deux éléments de réception (9, 10) dans le prolongement l'un de l'autre dans un plan commun horizontal au-dessus du plan de dépôt (AE), à savoir dans le cas d'une couche de marchandises de détail (3) reposant en partie sur le premier élément de réception et en partie sur le deuxième élément de réception (9, 10), et sachant que les éléments de réception (9, 10) peuvent être éloignés l'un de l'autre par un déplacement sur le plan de dépôt (AE) afin de déposer la couche de marchandises de détail (3) devant être transférée, **caractérisé en ce que** le premier et le deuxième élément de réception (9, 10) peuvent être commandés indépendamment l'un de l'autre par rapport à toutes les courses de déplacement (V9, H9 ; V10, H10), et/ou **en ce que** des entraînements de levage (11, 12) indépendants et pouvant être commandés individuellement sont prévus pour le premier élément de réception (9) et pour le deuxième élément de réception (10).

2. Dispositif selon la revendication 1, **caractérisé en ce qu'**au début de chaque cycle de travail, le premier élément de réception (9) se trouve au niveau de la position de mise à disposition (5), de sorte qu'une surface de réception de marchandises de détail du premier élément de réception est disposée au même niveau qu'un premier niveau de hauteur (N1) ou sensiblement au même niveau que la position de mise à disposition (5) ou qu'un plateau de distribution (6) s'y trouvant.

3. Dispositif selon la revendication 1 ou 2, **caractérisé en ce qu'**au début de chaque cycle de travail, le deuxième élément de réception (10) se trouve sur un deuxième niveau de hauteur (N2), au-dessus du plan de dépôt (AE) pour le dépôt de la couche de marchandises de détail (3) devant être transférée dans ledit cycle de travail, sachant que le deuxième niveau en hauteur (N2) est de préférence le niveau de la position de transfert.

4. Dispositif selon la revendication 2 ou 3, **caractérisé en ce que** au moins un premier élément de réception (9) peut être déplacé, à la fin de chaque cycle de travail, lors d'une course de retour, depuis la position de transfert dans la position de mise à disposition (5), et **en ce qu'**au moins en partie de manière simultanée avec la course de retour du premier élément de réception (9), le deuxième élément de réception (10) est déplacé dans une position intermédiaire ou dans une position de transfert, sur le deuxième niveau de hauteur (N2), au-dessus du plan de dépôt (AE), pour la prochaine couche de marchandises de détail (3) ou couche partielle de marchandises de détail devant être déposée au niveau de la position d'empilement (7).

5. Dispositif selon l'une quelconque des revendications précédentes, **caractérisé par** des moyens servant à transférer par guidage ou par coulissement la couche de marchandises de détail (3) correspondante ou la couche partielle de marchandises de détail depuis position de mise à disposition (5) ou depuis le plateau de distribution (6), sur le premier élément de réception (9) et/ou pour transférer par coulissement en partie la couche de marchandises de détail (3) ou la couche partielle de marchandises de détail du premier élément de réception (9) sur le deuxième élément de réception (10) dans le cas d'éléments de réception (9, 10) rassemblés, de préférence sur le deuxième niveau de hauteur (N2).

6. Dispositif selon l'une quelconque des revendications précédentes, **caractérisé en ce que** le premier et le deuxième élément de réception (9, 10) sont réalisés de telle manière que la couche de marchandises de détail (3) à transférer ou la couche partielle de marchandises de détail à transférer repose, dans le cas d'éléments de réception (9, 10) se trouvant dans la position de transfert, respectivement à moitié sur le premier et sur le deuxième élément de réception (9, 10).

7. Dispositif selon l'une quelconque des revendications précédentes, **caractérisé en ce que** les entraînements de levage (11, 12) sont réalisés et commandés de manière à ce qu'après avoir rassemblé les éléments de réception (9, 10), les deux éléments de réception (9, 10) peuvent être déplacés de manière synchrone et à une vitesse égale dans la position de transfert, dans laquelle se trouve une zone de transition ou de raccordement entre les éléments de réception (9, 10) au-dessus du plan de dépôt (AE).
